# EUROPEAN PATENT SPECIFICATION

(11) **EP 3 535 303 B1**
(45) Date of publication and mention of the grant of the patent: **04.10.2023**
(21) Application number: 17800734.0
(22) Date of filing: 02.11.2017
(51) Int. Cl.: C08F 110/02, C08F 2/34, C08F 4/654, C08F 4/649

(54) **PROCESS FOR THE POLYMERIZATION OF OLEFINS**
VERFAHREN ZUR POLYMERISIERUNG VON OLEFINEN
PROCÉDÉ POUR LA POLYMÉRISATION D'OLÉFINES

(30) Priority: 04.11.2016 EP 16197310
(43) Date of publication of application: 11.09.2019
(73) Proprietor: Basell Poliolefine Italia S.r.l., 20121 Milano (IT)
(72) Inventor: BAITA, Pietro, 44122 Ferrara (IT); COVEZZI, Massimo, 44122 Ferrara (IT); DI DIEGO,Maria, 44122 Ferrara (IT); MARTURANO, Lorella, 44122 Ferrara (IT); MAZZUCCO, Antonio, 44122 Ferrara (IT); MEI, Gabriele, 44122 Ferrara (IT); PICA, Roberta, 44122 Ferrara (IT)
(74) Representative: LyondellBasell
(86) International application number: PCT/EP2017/078033
(87) International publication number: WO 2018/083161

(56) References cited:
- WO-A1-2009/156355
- WO-A1-2015/135903
- US-A- 4 368 304
- US-B1- 6 455 642

## Description

### FIELD OF THE INVENTION

The present disclosure relates to a gas-phase process for the polymerization of olefins, in particular ethylene and its mixtures with olefins CH₂=CHR, wherein R is an alkyl, cycloalkyl or aryl radical having 1-12 carbon atoms, carried out in the presence of a catalyst system comprising (a) a solid catalyst component comprising Ti, Mg, halogen and optionally an electron donor, and (b) an aluminum alkyl compound which are brought in contact with a specific and particular sequence of steps.

### BACKGROUND OF THE INVENTION

Gas-phase polymerization is one of the most spread out techniques for the preparation of polyethylene which can be carried out in a fluidized, or stirred, bed reactor in the presence of a suitable catalyst, ethylene, fluidization gas and molecular weight regulator typically consisting of hydrogen. Ziegler-Natta catalysts are generally used for this type of polymerization.

In the evaluation of a catalyst performance for gas-phase ethylene polymerization activity is a very important factor. For a given catalyst system, it may depend on the polymerization conditions, such as temperature and pressure. However, once fixed the polymerization conditions the activity depends strictly on the catalyst system and when the activity is not satisfactory the amount of catalyst fed to the reactor must be increased or its residence time made longer. Both solutions however, penalize the plant operability from the economic point of view as the increase of catalyst fed means increase of the cost per unity of polymer produced, while the increase of the residence time means a lower productivity of the plant.

One of the solutions proposed in the art, like for example in EP 529977, consists in the use of additional chemicals in order to boost catalyst activity. Said chemicals are selected from halogenated hydrocarbons that are typically added directly to the polymerization reactor. Although the catalyst activity can be indeed improved, there are several possible drawbacks associated to the addition of chlorinated chemicals to the polymerization reactor; the most important being increase of corrosion and the modification of the polymer properties due to the interactions with the catalyst. Other relevant prior art documents are US 6,455,642 and WO 2015/135903 and US 4,368, 304, as well as WO 2009/156355.

It is therefore still felt the need of a method to increase the catalyst activity without changing polymer properties and without risks for the polymerization apparatuses as well.

### SUMMARY OF THE INVENTION

The applicant has now found that the use of hydrogen in a relatively low amount and in a specific stage of catalyst preparation allows enhancing the catalyst activity. Moreover, being hydrogen an inert chemical and already used in the polymerization reactor as chain transfer agent to control molecular weight, it cannot cause corrosion.

It is therefore an object of the present disclosure a gas-phase process for the homo or copolymerization of olefins comprising the following step:
1) contacting in a liquid hydrocarbon and in the absence of olefins (a) a solid catalyst component comprising a Ti, Mg and Cl, and optionally an internal electron donor compound, (b) an aluminum alkyl compound and optionally (c) an external donor compound;
2) feeding the product of the contact in step 1) to a gas-phase polymerization reactor under polymerization conditions, said process being characterized by the fact that the contact in step 1) is carried out in the presence of H₂ in an amount ranging from 0.1 to 8 g per Kg of solid catalyst component (a).

### DETAILED DESCRIPTION OF THE INVENTION

Preferably, the amount of H₂ ranges between 0.2 to 6 g and more preferably from 0.3 to 5 g per Kg of solid catalyst component (a).

The contact of the components (a)-(b), optionally (c), and hydrogen is preferably carried out for a period of time ranging from 10 to 120 minutes preferably in the range from 20 to 60 minutes more preferably from 30 to 50 minutes. The temperature may range from ranging from 20 to 65°C preferably in the range of 30 to 60°C and more preferably in the range 45-55°C. The liquid hydrocarbon may be aliphatic or aromatic. Preference is given to aliphatic saturated hydrocarbons having from 3 to 10 carbon atoms more preferably from 3 to 6 carbon atoms. Among them propane, pentane and hexane are preferred.

Several ways of contacting hydrogen with components (a)-(c) are possible. The preferred procedure consists in dissolving the predetermined amount of hydrogen into the liquid hydrocarbon which is then used as medium for the contact of components (a)-(b) and optionally (c). In an alternative way, hydrogen can be fed directly to the recipient where the components (a)-(b) and optionally (c) are already in contact trough the hydrocarbon slurry.

The solid catalyst component (a) preferably comprises a Ti compound supported on magnesium chloride.

The preferred titanium compounds have the formula Ti(OR^{II})ₙX_{y-n}, wherein n is a number comprised between 0 and 0.5 inclusive, y is the valence of titanium, R^{II} is an alkyl, cycloalkyl or aryl radical having 1-8 carbon atoms and X is halogen. In particular R^{II} can be ethyl, isopropyl, n-butyl, isobutyl, 2-ethylhexyl, n-octyl and phenyl, (benzyl); X is preferably chlorine.

If y is 4, n varies preferably from 0 to 0.02; if y is 3, n varies preferably from 0 to 0.015. TiCl₄ is especially preferred.

The solid catalyst component (A) may comprise an internal electron donor compound (internal donor), selected for example among ethers, esters, amines and ketones. The internal electron donor compound (ID) may be used in amount such as to give ID/Ti ratios from 0.1 to 8, preferably from 0.5 to 7 and more preferably from 1 to 6.

Preferred internal electron donor compounds are selected from esters of aliphatic or aromatic carboxylic acids such as phthalates, acetates, in particular ethylacetate, benzoates, alkoxybenzenes, cyclic alkyl ethers such as tetrahydrofurane and diethers. Among them, ethyl acetate and tetrahydrofurane being the most preferred.

In addition to the above mentioned characteristics, the solid catalyst component (A) may show a porosity P_{F} (deriving from pores with radius up to 1 µ) determined with the mercury method ranging from 0.2 to 0.80 cm³/g and more preferably from 0.3 to 0.70 cm³/g usually in the range 0.35-0.60 cm³/g.

The surface area measured by the BET method is preferably lower than 80 and in particular comprised between 10 and 70 m²/g. The porosity measured by the BET method is generally comprised between 0.10 and 0.50, preferably from 0.10 to 0.40 cm³/g.

The particles of solid component have substantially spherical morphology and average diameter comprised between 20 and 150 µm, preferably from 40 to 100 µm. As particles having substantially spherical morphology, those are meant wherein the ratio between the greater axis and the smaller axis is equal to or lower than 1.5 and preferably lower than 1.3.

A method suitable for the preparation of solid catalyst components mentioned above comprises a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{I})ₙX₄₋ₙ, in which n, y, X and R^{I}have the same meaning as already defined.

In this case MgCl₂.mR^{III}OH represents a precursor of Mg dihalide. These kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.

Generally these dealcoholated adducts are also characterized by a porosity (measured by mercury method ) due to pores with radius up to 1µm ranging from 0.15 to 2.5 cm³/g preferably from 0.25 to 1.5 cm³/g.

In the reaction of step (a) the molar ratio Ti/Mg is stoichiometric or higher; preferably this ratio is higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning. The step (a) can be repeated twice or more. In cases of catalysts containing an electron donor compound, this latter can be added together with the titanium compound in the reaction system for reaction with the MgCl₂.mR^{III}OH adduct.

However, it constitutes a preferred embodiment adding the internal electron donor compound separately in a further step after the completion of the reaction between the adduct and the titanium compound as described in WO2004/106388.

According to another variant of the process, before adding the internal electron donor, the solid catalyst component coming from the end of step (a) is subject to prepolymerization in the presence of aluminum alkyls, small amount of monomer and optionally an external donor as described in WO2014/202420.

The catalyst component (b) can be selected from Al-alkyl compounds possibly halogenated. Preferably, it is selected from Al-trialkyl compounds or dialkyl aluminum chlorides such as for example Al-trimethyl (TMA), Al-triethyl (TEA), Al-triisobutyl (TIBA) Al-trihexyl (THA) diethylaluminum chloride (DEAC) and mixtures therof. Among them, mixtures among TiBA and DEAC are preferred. The Al/Ti ratio is higher than 1 and is generally comprised between 5 and 800.

In some cases also an external electron donor compound as a component (c) is present which is selected from esters of aliphatic or aromatic carboxylic acids, cyclic alkyl ethers such as tetrahydrofurane and diethers, and alkoxysilanes possibly substituted with alkyl or cycloalkyl groups. Among them, tetrahydrofurane is the most preferred.

The catalyst system formed by the contact of components (a)-(b), optionally with (c), in the presence of hydrogen, can be used directly in the main gas-phase polymerization process or alternatively, it can be pre-polymerized beforehand. A pre-polymerization step is usually preferred when a pre-polymerization has not yet occurred in the preparation of the solid catalyst component (a). The pre-polymerization can be carried out with any of the olefins CH₂=CHR, where R is H or a C₁-C₁₀ hydrocarbon group. In particular, it is especially preferred to pre-polymerize ethylene, propylene or mixtures thereof with one or more α-olefins, said mixtures containing up to 20% in moles of α-olefin, forming amounts of polymer from about 0.1 g per gram of solid component up to about 1000 g per gram of solid catalyst component. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process.

The gas-phase polymerization process of the present disclosure is preferably carried out at a temperature ranging from 60 to 130°C, preferably from 70 to 110°C, in any type of gas-phase reactor. Generally, the total pressure of the gas-phase ranges from 10 to 40 bar preferably from 15 to 35 bars. The fluidizing inert gas can be chosen among any inert gas known for this purpose. Nitrogen and propane are particularly preferred.

A particularly preferred gas-phase process for the polymerization of olefins, comprises the following steps in any order:
i) polymerizing ethylene, optionally together with one or more comonomers, in a gas-phase reactor in the presence of hydrogen and of a catalyst system comprising (a) a solid catalyst component comprising a Ti, Mg and Cl, and optionally an internal electron donor compound, (b) an aluminum alkyl compound and, optionally, (c) an external donor compound;
ii) copolymerizing ethylene with one or more comonomers, in another gas-phase reactor in the presence of an amount of hydrogen less than step i) and of the catalysts system as defined in step i);
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones. In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer. In other words, the polymer flows vertically down through the downcomer in a plug flow (packed flow mode), so that only small quantities of gas are entrained between the polymer particles.

Preferably, in the above described process, in step (ii) a copolymerization of ethylene with one or more comonomers is carried out.

When polymerizing ethylene, and optionally comonomers, in gas-phase the amount of hydrogen used, and therefore the pressure ratio H₂/C₂⁻ depends on the type of polyethylene to be produced and in particular from its desired molecular weight expressed in terms Melt Flow Rate determined according to ASTM-D 1238 condition E. For relatively lower molecular weight (high values of MFR) a higher amount of hydrogen is needed and therefore also the pressure ratio H₂/C₂⁻ will be higher. Generally however, it ranges from 0.5 to 5, preferably from 1 to 4 and more preferably from 1.5 to 3.5.

Although not strictly necessary in view of the increase of polymerization activity deriving from the use of hydrogen in step 1), if desired a further activity enhancer may be added in one or more of the polymerization steps. Preferably, the activity enhancer is chosen among alkyl or cycloalkyl chlorides and halogenated alcohols preferably used in amounts such as to give a molar ratio with Ti (where Ti is the titanium molar amount within component (a)), ranging from 0.1 to 10, more preferably from 0.5 to 8 and especially from 0.5 to 6. Preferred activity enhancer compounds are propyl chloride, isobutyl chloride, cyclohexyl chloride and 2,2,2-trichloro ethanol.

Further ingredients conventionally used in the art such as antistatic, stabilizer, fillers can be used as well.

In addition to the ethylene homo and copolymers mentioned above the catalysts of the present invention are also suitable for preparing very-low-density and ultra-low-density polyethylene (VLDPE and ULDPE, having a density lower than 0.920g/cm³, to 0.880 g/cm³) consisting of copolymers of ethylene with one or more alpha-olefins having from 3 to 12 carbon atoms, having a mole content of units derived from ethylene of higher than 80%; elastomeric copolymers of ethylene and propylene and elastomeric terpolymers of ethylene and propylene with smaller proportions of a diene having a content by weight of units derived from ethylene of between about 30 and 70%.

The following examples are given in order to further describe the present disclosure.

### EXAMPLES

### CHARACTERIZATIONS

The properties are determined according to the following methods:

| | |
|---|---|
| MIE flow index: | ASTM-D 1238 condition E |
| Bulk density: | DIN-53194 |

### EXAMPLES 1-2 and COMPARATIVE 1

### Procedure for the preparation of the solid catalyst component (A)

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 25% of alcohol was reached.

Into a 2 L four-necked round flask, purged with nitrogen, 1 L of TiCl₄ was introduced at 0°C. Then, at the same temperature, 70 g of a spherical MgCl₂/EtOH adduct containing 25 %wt of ethanol and prepared as described above were added under stirring. The temperature was raised to 140 °C in 2 h and maintained for 120 minutes. Then, the stirring was discontinued, the solid product was allowed to settle and the supernatant liquid was siphoned off. The solid residue was then washed once with heptane at 80°C and five times with hexane at 25°C and dried under vacuum at 30 °C.

Into a 260cm³ glass reactor provided with stirrer, 351.5 cm³ of hexane at 20°C and whilst stirring 7 g of the catalyst component prepared as described above were introduced at 20°C. Keeping constant the internal temperature, 5.6 cm³ of tri-n-octylaluminum (TNOA) in hexane (about 370 g/l) and an amount of cyclohexylmethyl-dimethoxysilane (CMMS) such as to have molar ratio TNOA/CMMS of 50, a were slowly introduced into the reactor and the temperature was brought to 10°C. After 10 minutes stirring, 10 g of propylene were carefully introduced into the reactor at the same temperature during a time of 4 hours. The consumption of propylene in the reactor was monitored and the polymerization was discontinued when a theoretical conversion of 1g of polymer per g of catalyst was deemed to be reached. Then, the whole content was filtered and washed three times with hexane at a temperature of 30°C (50 g/l). After drying the resulting pre-polymerized catalyst (A) was analyzed and found to contain 1.05 g of polypropylene per g of initial catalyst, 2.7%Ti, 8.94%Mg and 0.1%Al.

About 42g of the solid prepolymerised catalyst prepared by multiple runs carried out as described above, were charged in a glass reactor purged with nitrogen and suspended in 0.8L of hexane at 50°C.

Then, ethyl acetate was carefully added dropwise (in 10') in such an amount to have a molar ratio of 1.7 between Mg of the prepolymerised catalyst and the organic Lewis base.

The slurry was kept under stirring for 2h at 50°C.

After that, the stirring was stopped and the solid was allowed to settle. One single hexane wash was performed at room temperature before recovering and drying the final catalyst.

### Example 1 Polymerization procedure

The polymerization process was carried out in a plant working continuously and equipped with a stirred vessel (pre-contacting pot) in which the catalyst components are mixed to form the catalytic system, and one fluidized bed reactor (*polymerization reactor*) kept under fluidization conditions with propane receiving the catalyst mixture coming from the stirred vessel.

The following reactants are fed to the pre-contacting pot and maintained at a temperature of 50°C:
- the solid catalyst component prepared as described above (28g/h)
- liquid propane as diluent containing 100 ppm of H₂ (0.2Kg/h)
- a solution of TIBA/DEAC (140 Kg/h)
- a solution of tetrahydrofuran (THF) as external donor (2Kg/h)

The so obtained catalytic system was fed, via liquid propane containing 100 ppm of H₂ (at a rate of 0.2Kg/h) from the pre-contacting section to the gas-phase fluidized bed reactor together with monomer feed. The reactor was operated under the conditions reported in Table 1. The polymer discharged from the final reactor was first transferred to the steaming section and then dried at 70°C under a nitrogen flow and weighted. The polymer properties are reported in Table 1.

### Example 2

The same procedure of Example 1 was followed with the difference that liquid propane containing 300 ppm of H₂ was used.

### Comparative Example 1

The same procedure of example 1was followed with the difference that liquid propane not containing H₂ was used.

**Table 1**

| EXAMPLE | | 1 | 2 | C1 |
|---|---|---|---|---|
| T | °C | 80 | 80 | 80 |
| P | bar | 26 | 26 | 26 |
| C₂⁻ | % | 11.4 | 11.8 | 11.0 |
| H₂/C₂⁻ | - | 2.5 | 2.5 | 2.5 |
| Spec. Mileage | g/g/bar.h | 492 | 483 | 397 |
| MIE | g/10' | 81 | 94 | 85 |
| PBD | g/cc | 0.430 | 0.434 | 0.434 |

## Claims

1. A gas-phase process for the homo or copolymerization of olefins comprising the following steps:
1) contacting in a liquid hydrocarbon and in the absence of olefins (a) a solid catalyst component comprising a Ti, Mg and Cl, and optionally an internal electron donor compound, (b) an aluminum alkyl compound and optionally (c) an external donor compound;
2) feeding the product of the contact in step 1) to a gas-phase polymerization reactor under polymerization conditions, said process being **characterized by** the fact that the contact in step 1) is carried out in the presence of H₂ in an amount ranging from 0.1 to 8 g per Kg of solid catalyst component (a).

2. The gas-phase process according to claim 1 in which the amount of H₂ ranges between 0.2 to 6 g per Kg of solid catalyst component (a).

3. The gas-phase process according to claim 1 in which the contact of the components (a)-(c) and hydrogen is carried out for a period of time ranging from 10 to 120 minutes.

4. The gas-phase process according to claim 1 in which the temperature of the contact step 1) ranges from ranging from 20 to 65°C.

5. The gas-phase process according to claim 1 in which the liquid hydrocarbon is selected from aliphatic saturated hydrocarbons having from 3 to 10 carbon atoms.

6. The gas-phase process according to claim 1 in which the liquid hydrocarbon medium contains a predetermined amount of hydrogen dissolved in it.

7. The gas-phase process according to claim 1 in which the solid catalyst component (a) further comprises an internal donor (ID) selected for example among ethers, esters, amines and ketones.

8. The gas-phase process according to claim 7 in which the ID is used in amount such as to give ID/Ti ratios from 0.1 to 8.

9. The gas-phase process according to claim 1 in which the internal electron donor is selected among esters of aliphatic carboxylic acids .

10. The gas-phase process according to claim 1 in which in step 1) is present also an external donor as component (c) which is selected from esters of aliphatic or aromatic carboxylic acids, cyclic alkyl ethers and alkoxysilanes possibly substituted with alkyl or cycloalkyl groups.

11. The gas-phase process according to claim 10 in which the external donor is tetrahydrofurane.

12. The gas-phase process according to claim 1 in which the aluminum alkyl compound (b) is selected from TIBA/DEAC mixtures.

13. The gas-phase process according to claim 1 in which step 2) is carried out at a temperature ranging from 60 to 130°C and at total pressure of the gas-phase from 10 to 40 bar.

14. The gas-phase process according to claim 1 in which step 2) comprises the following steps in any order:
i) polymerizing ethylene, optionally together with one or more comonomers, in a gas-phase reactor in the presence of hydrogen and of a catalyst system coming from step 1);
ii) copolymerizing ethylene with one or more comonomers in another gas-phase reactor in the presence of an amount of hydrogen less than step i) and of the catalysts system as defined in step i);
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

## Patentansprüche

1. Gasphasenverfahren zur Homo- oder Copolymerisation von Olefinen, umfassend die folgenden Schritte:
1) Kontaktieren von (a) einer festen Katalysatorkomponente, umfassend ein Ti, Mg und Cl und gegebenenfalls eine interne Elektronendonorverbindung, (b) einer Aluminiumalkylverbindung und gegebenenfalls (c) einer externen Donorverbindung, in einem flüssigen Kohlenwasserstoff und in Abwesenheit von Olefinen;
2) Einspeisen des Produkts des Kontakts in Schritt 1) in einen Gasphasenpolymerisationsreaktor unter Polymerisationsbedingungen, wobei das Verfahren durch die Tatsache gekennzeichnet ist, dass der Kontakt in Schritt 1) in Anwesenheit von H₂ in einer Menge im Bereich von 0,1 bis 8 g pro kg der festen Katalysatorkomponente (a) durchgeführt wird.

2. Gasphasenverfahren nach Anspruch 1, wobei die Menge an H₂ im Bereich zwischen 0,2 und 6 g pro kg fester Katalysatorkomponente (a) liegt.

3. Gasphasenverfahren nach Anspruch 1, wobei der Kontakt der Komponenten (a) bis (c) und Wasserstoff für einen Zeitraum im Bereich von 10 bis 120 Minuten durchgeführt wird.

4. Gasphasenverfahren nach Anspruch 1, wobei die Temperatur des Kontaktschrittes 1) im Bereich von 20 bis 65 °C liegt.

5. Gasphasenverfahren nach Anspruch 1, wobei der flüssige Kohlenwasserstoff ausgewählt ist aus aliphatischen gesättigten Kohlenwasserstoffen mit 3 bis 10 Kohlenstoffatomen.

6. Gasphasenverfahren nach Anspruch 1, wobei das flüssige Kohlenwasserstoffmedium eine vorbestimmte Menge an darin gelöstem Wasserstoff enthält.

7. Gasphasenverfahren nach Anspruch 1, wobei die feste Katalysatorkomponente (a) des Weiteren einen internen Donor (ID) beispielsweise ausgewählt aus Ethern, Estern, Aminen und Ketonen umfasst.

8. Gasphasenverfahren nach Anspruch 7, wobei der ID in einer solchen Menge verwendet wird, um Verhältnisse von ID/Ti von 0,1 bis 8 zu ergeben.

9. Gasphasenverfahren nach Anspruch 1, wobei der interne Elektronendonor ausgewählt ist aus Estern von aliphatischen Carbonsäuren.

10. Gasphasenverfahren nach Anspruch 1, wobei in Schritt 1) auch ein externer Donor als Komponente (c) vorhanden ist, der ausgewählt ist aus Estern von aliphatischen oder aromatischen Carbonsäuren, cyclischen Alkylethern und Alkoxysilanen, möglicherweise substituiert mit Alkyl- oder Cycloalkylgruppen.

11. Gasphasenverfahren nach Anspruch 10, wobei der externe Donor Tetrahydrofuran ist.

12. Gasphasenverfahren nach Anspruch 1, wobei die Aluminiumalkylverbindung (b) ausgewählt ist aus TIBA/DEAC-Mischungen.

13. Gasphasenverfahren nach Anspruch 1, wobei Schritt 2) bei einer Temperatur im Bereich von 60 bis 130 °C und bei einem Gesamtdruck der Gasphase von 10 bis 40 bar durchgeführt wird.

14. Gasphasenverfahren nach Anspruch 1, wobei Schritt 2) die folgenden Schritte in beliebiger Reihenfolge umfasst:
i) Polymerisieren von Ethylen, gegebenenfalls zusammen mit einem oder mehreren Comonomeren, in einem Gasphasenreaktor in Gegenwart von Wasserstoff und einem Katalysatorsystem, das aus Schritt 1) kommt;
ii) Copolymerisieren von Ethylen mit einem oder mehreren Comonomeren in einem anderen Gasphasenreaktor in Gegenwart einer Menge an Wasserstoff, die kleiner als in Schritt i) ist, und dem Katalysatorsystem wie in Schritt i) definiert;
wobei in mindestens einem der Gasphasenreaktoren die wachsenden Polymerpartikel durch eine erste Polymerisationszone (Steigrohr) unter raschen Verwirbelungs- oder Transportbedingungen aufwärts fließen, das Steigrohr verlassen und in eine zweite Polymerisationszone (Fallrohr) eintreten, durch die hindurch sie unter Einwirkung der Schwerkraft abwärts fließen, das Fallrohr verlassen und erneut in das Steigrohr eingebracht werden, wodurch eine Zirkulation von Polymer zwischen den beiden Polymerisationszonen eingerichtet wird.

## Revendications

1. Procédé en phase gazeuse pour l'homopolymérisation ou la copolymérisation d'oléfines, comprenant les étapes suivantes
1) mise en contact dans un hydrocarbure liquide et en l'absence d'oléfines de (a) un constituant catalytique solide comprenant Ti, Mg et Cl et éventuellement un composé donneur d'électrons interne, (b) un composé d'alkylaluminium et éventuellement (c) un composé donneur externe ;
2) introduction du produit du contact dans l'étape 1) dans un réacteur de polymérisation à phase gazeuse dans des conditions de polymérisation, ledit procédé étant **caractérisé en ce que** le contact dans l'étape 1) est effectué en présence de H₂ en une quantité située dans la plage de 0,1 à 8 g par kg de constituant catalytique solide (a).

2. Procédé en phase gazeuse selon la revendication 1, dans lequel la quantité de H₂ est située dans la plage de 0,2 à 6 g par kg de constituant catalytique solide (a).

3. Procédé en phase gazeuse selon la revendication 1, dans lequel le contact des constituants (a)-(c) et de l'hydrogène est effectué pendant une durée située dans la plage de 10 à 120 minutes.

4. Procédé en phase gazeuse selon la revendication 1, dans lequel la température de l'étape de mise en contact 1) est située dans la plage de 20 à 65 °C.

5. Procédé en phase gazeuse selon la revendication 1, dans lequel l'hydrocarbure liquide est choisi parmi les hydrocarbures aliphatiques saturés comprenant 3 à 10 atomes de carbone.

6. Procédé en phase gazeuse selon la revendication 1, dans lequel le milieu hydrocarboné liquide contient une quantité prédéterminée d'hydrogène dissous en son sein.

7. Procédé en phase gazeuse selon la revendication 1, dans lequel le constituant catalytique solide (a) comprend en outre un donneur interne (DI) choisi par exemple parmi les éthers, les esters, les amines et les cétones.

8. Procédé en phase gazeuse selon la revendication 7, dans lequel le DI est utilisé en une quantité telle que des rapports DI/Ti de 0,1 à 8 sont obtenus.

9. Procédé en phase gazeuse selon la revendication 1, dans lequel le donneur d'électrons interne est choisi parmi les esters d'acides carboxyliques aliphatiques.

10. Procédé en phase gazeuse selon la revendication 1, dans lequel, à l'étape 1), un donneur externe est également présent en tant que constituant (c), choisi parmi les esters d'acides carboxyliques aliphatiques ou aromatiques, les alkyléthers cycliques et les alcoxysilanes éventuellement substitués par des groupes alkyle ou cycloalkyle.

11. Procédé en phase gazeuse selon la revendication 10, dans lequel le donneur externe est le tétrahydrofuranne.

12. Procédé en phase gazeuse selon la revendication 1, dans lequel le composé d'alkylaluminium (b) est choisi parmi les mélanges TIBA/DEAC.

13. Procédé en phase gazeuse selon la revendication 1, dans lequel l'étape 2) est effectuée à une température située dans la plage de 60 à 130 °C et à une pression totale de la phase gazeuse de 10 à 40 bars.

14. Procédé en phase gazeuse selon la revendication 1, dans lequel l'étape 2) comprend les étapes suivantes, dans n'importe quel ordre :
i) polymérisation d'éthylène, éventuellement conjointement avec un ou plusieurs comonomères, dans un réacteur à phase gazeuse en présence d'hydrogène et d'un système catalytique issu de l'étape 1) ;
ii) copolymérisation d'éthylène avec un ou plusieurs comonomères dans un autre réacteur à phase gazeuse en présence d'une quantité d'hydrogène inférieure à celle de l'étape i) et du système catalytique tel que défini à l'étape i) ;
où, dans au moins un desdits réacteurs à phase gazeuse, les particules de polymère en croissance s'écoulent vers le haut à travers une première zone de polymérisation (colonne ascendante) dans des conditions de fluidisation ou de transport rapides, quittent ladite colonne ascendante et entrent dans une deuxième zone de polymérisation (colonne descendante) à travers laquelle elles s'écoulent vers le bas sous l'action de la gravité, quittent ladite colonne descendante et sont réintroduites dans la colonne ascendante, établissant ainsi une circulation de polymère entre lesdites deux zones de polymérisation.
